(19) Europäisches Patentamt
European Patent Office
Office européen des brevets

(11) **EP 1 072 125 B1**

(12) **EUROPÄISCHE PATENTSCHRIFT**

(45) Veröffentlichungstag und Bekanntmachung des Hinweises auf die Patenterteilung:
**31.03.2004 Patentblatt 2004/14**

(51) Int Cl.[7]: **H04L 12/24**

(21) Anmeldenummer: **99920773.1**

(86) Internationale Anmeldenummer:
**PCT/EP1999/002778**

(22) Anmeldetag: **12.04.1999**

(87) Internationale Veröffentlichungsnummer:
**WO 1999/053649 (21.10.1999 Gazette 1999/42)**

(54) **VERFAHREN ZUM BETREIBEN EINES TELEKOMMUNIKATIONSNETZES UNTER VERWENDUNG VON WARTUNGSNACHRICHTEN MIT FILTERBEDINGUNGEN**

METHOD FOR OPERATING A TELECOMMUNICATIONS NETWORK USING MAINTENANCE MESSAGES WITH FILTERING CONDITIONS

PROCEDE PERMETTANT DE FAIRE FONCTIONNER UN RESEAU DE TELECOMMUNICATION A L'AIDE DE MESSAGES DE MAINTENANCE CONTENANT DES CONDITIONS DE FILTRAGE

(84) Benannte Vertragsstaaten:
**AT BE CH DE ES FI FR GB LI**

(30) Priorität: **15.04.1998 EP 98106835**

(43) Veröffentlichungstag der Anmeldung:
**31.01.2001 Patentblatt 2001/05**

(73) Patentinhaber: **SIEMENS AKTIENGESELLSCHAFT**
**80333 München (DE)**

(72) Erfinder:
• **BERNHARDI, Karl**
**D-81369 München (DE)**

• **SCHILD, Bernhard**
**D-81369 München (DE)**

(56) Entgegenhaltungen:
• **DAN TIAN: "A SOFTWARE ARCHITECTURE SUPPORTING CMIP MANAGEMENT INFORMATION BASES OF ATM SWITCHES" GLOBECOM '95. IEEE GLOBAL TELECOMMUNICATIONS CONFERENCE, SINGAPORE, NOV. 14 - 16, 1995, Bd. 3, 14. November 1995 (1995-11-14), Seiten 1862-1866, XP000633611 INSTITUTE OF ELECTRICAL AND ELECTRONICS ENGINEERS**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Betreiben eines Telekommunikationsnetzes, bei dem an einem Netzknoten eines Telekommunikationsnetzes eine vermittlungstechnische Einrichtung von einem Vermittlungsrechner gesteuert wird. Im Vermittlungsrechner sind neben dem Betriebssystem typischerweise mehrere hundert Anwendungsprogramme zum Bearbeiten von Anwendungsobjekten gespeichert. Die Anwendungsobjekte haben je nach Zugehörigkeit zu einer bestimmten Objektklasse vorgegebene Objektdaten. Der Vermittlungsrechner wird von einem Bedienrechner aus mittels Wartungsnachrichten gewartet. In den Wartungsnachrichten sind Filterbedingungen zum Auswählen bestimmter Anwendungsobjekte enthalten.

Ist die vermittlungstechnische Einrichtung eine Vermittlungsstelle, so gibt es u.a. ein Anwendungsprogramm zum Verwalten der an die Vermittlungsstelle angeschlossenen Teilnehmer. Die Daten dieser Teilnehmer werden in Teilnehmerobjekten gespeichert. Wird die Vermittlungsstelle in Betrieb genommen oder werden später Teilnehmerdaten in der Vermittlungsstelle geändert, so erfolgt dies zweckmäßig von einem zentralen Bedienrechner aus. Leistungsfähige Verfahren zum Warten des Telekommunikationsnetzes entstehen, wenn sogenannte offene Systeme verwendet werden, bei deren Programmierung weltweit geltende Standards beachtet werden. Beispielsweise betreffen Standards der ISO (International Standardization Organization) und der ITU (International Telecommunication Union) mit ihrem Organ ITU-T den Aufbau solcher offenen Systeme. Zum Warten des Vermittlungsrechners soll gemäß dieser Standards ein separates Führungsnetz verwendet werden. Die Schnittstellen zwischen Bedienrechner und Vermittlungsrechner sind in Protokollen standardisiert.

Die Anwendungsobjekte werden vom Bedienrechner aus als Modelle für bestimmte Geräte und Ressourcen betrachtet, z.B. für Festplatten, Prozessoren, Übertragungsleitungen oder Teilnehmeranschlüsse. In der Vermittlungsstelle muß durch die Anwendungsprogramme sichergestellt werden, daß die Objektdaten der Anwendungsobjekte auch den tatsächlichen Betriebszuständen der Geräte und Ressourcen entsprechen.

Wartungsnachrichten werden im Standard X.710 (1991), "Data Communication Networks: Open Systems Interconnection (OSI); Management - Common Management Information Service Definition for CCITT Applications" erläutert. So gibt es beispielsweise Wartungsnachrichten CREATE und GET zum Erzeugen bzw. Abfragen der Daten eines Anwendungsobjektes. Gemäß Abschnitt 6.4 des Standards X.710 gilt für die Anwendungsobjekte eine Baumstruktur, welche die Beziehung der verschiedenen Anwendungsobjekte zueinander festlegt. Die Auswahl eines Anwendungsobjektes kann ohne Filterbedingung durch Angabe der Objektklasse und durch Angabe eines Kennzeichens für das Anwendungsobjekt direkt erfolgen. Gemäß Abschnitt 6.5 des Standards X.710 wird jedoch auch eine indirekte Auswahl verwendet, bei der zuerst Ebenen in der Baumstruktur festgelegt werden, deren Anwendungsobjekte für eine danach auszuführende Filteroperation herangezogen werden. Wie die Wartungsnachrichten auf einfache Art und möglichst schnell im Vermittlungsrechner zu bearbeiten sind, ist dem Standard X.710 nicht zu entnehmen.

Aus der Druckschrift A SOFTWARE ARCHITECTURE SUPPORTING CMIP MANAGEMENT INFORMATION BASES OF ATM SWITCHES' GLOBECOM 1995. IEEE GLOBAL TELECOMMUNICATIONS CONFERENCE; SINGAPORE; Nov. 14-16, 1995, Bd. 3, 14. November 1995 (1995-11-14), Seiten 1862-1866, XP000633611 INSTITUTE OF ELECTRONIC ENGINEERS von Dan Tian ist eine Softwarearchitektur bekannt, die ein gemeinsames Management- und Informationsprotokoll einer Managementinformationsbasis von Netzwerkkoppelelementen mit asynchronem Übertragungsmodus hat. Ein Verwaltungsmanager übermittelt einen Verwaltungsagenten des Netzwerkkoppelelements eine Tätigkeitsanweisung. Der Verwaltungsagent übermittelt dem Verwaltungsmanager die Ergebnisse der ausgeführten Tätigkeit und/oder Ereignisberichte.

Es ist Aufgabe der Erfindung, ein einfaches Verfahren zum Betreiben eines Telekommunikationsnetzes anzugeben, bei dem die Anwendungsobjekte unter Verwendung von Wartungsnachrichten mit Filterbedingungen ausgewählt werden.

Diese Aufgabe wird durch ein Verfahren mit den im Patentanspruch 1 angegebenen Verfahrensschritten gelöst. Weiterbildungen des erfindungsgemäßen Verfahrens sind in den Unteransprüchen angegeben.

Beim erfindungsgemäßen Verfahren wird zusätzlich zu den eingangs genannten Verfahrensschritten beim Abarbeiten eines für mehrere Anwendungsprogramme genutzten Schnittstellenprogramms anhand der Filterbedingung in einer Vorauswahl mindestens eine Objektklasse ausgewählt. Anhand dieser Objektklasse wird dann das Anwendungsprogramm ausgewählt, welches die Anwendungsobjekte der ausgewählten Objektklasse bearbeitet. Die Auswahl der Objektklasse ist somit ein Zwischenschritt um das oder die auszuwählenden Anwendungsprogramme zu ermitteln. Der Zwischenschritt wird indirekt ausgeführt, wenn anhand der Filterbedingung direkt ein Anwendungsprogramm ausgewählt wird.

Die Filterbedingung wird beim erfindungsgemäßen Verfahren somit bereits bei der Vorauswahl verwendet, durch die eine Objektklasse und ein zugehöriges Anwendungsprogramm ausgewählt wird. Das Anwendungsprogramm wählt anschließend ebenfalls anhand der Filterbedingung in einer Endauswahl die Anwendungsobjekte aus, welche die Filterbedingung erfüllen. Nur für die bei der Endauswahl ausgewählten Anwendungsobjekte wird dann ein in der Wartungsnachricht angegebener Befehl ausgeführt. Durch die Vorauswahl im Schnittstellenprogramm wird erreicht, daß nur wenige Anwendungsprogramme oder sogar nur ein Anwendungsprogramm für die Endauswahl abgearbeitet werden muß. Bei der Vorauswahl werden zahlreiche Anwendungsprogramme und damit auch die von ihnen bearbeiteten Anwendungsobjekte bereits aus der Suche ausgeschlossen. Überflüssige Suchvorgänge werden somit beim erfindungsgemäßen Verfahren vermieden.

Durch das Verwenden eines für mehrere Anwendungsprogramme genutzten Schnittstellenprogramms muß der Programmteil für die Vorauswahl nur einmal programmiert werden. Dies erleichtert auch spätere Änderungen. Durch die Vorauswahl wird außerdem erreicht, daß das Schnittstellenprogramm nicht alle Anwendungsprogramme von der eingetroffenen Wartungsnachricht benachrichtigen muß. Bei der Vorauswahl wird die Menge der in Frage kommenden Anwendungsobjekte nach oben hin abgeschätzt, d.h. die bei der Vorauswahl verwendete modifizierte Filterbedingung erfaßt zumindest die eigentlich in Frage kommenden Anwendungsobjekte bzw. Objektklassen. Im fehlerfreien Fall werden dagegen nicht alle Objektklassen ausgewählt, sondern nur eine hinnehmbar große Menge von Objektklassen. Ein Bedienfehler auf der Seite des Bedienrechners liegt vor, wenn alle Objektklassen bei der Vorauswahl ausgewählt werden. Für die Abschätzung sind erheblich weniger Daten erforderlich als für eine sofortige Ermittlung der durch die Filterbedingung betroffenen Anwendungsobjekte. Weiterhin kann durch die Vorauswahl die Menge der in Frage kommenden Anwendungsobjekte bzw. Anwendungsklassen trotz der nach oben hin durchgeführten Abschätzung schon beträchtlich eingeschränkt werden.

Diese erfindungsgemäßen Maßnahmen erlauben es, die für die Anwendungsobjekte festgelegte Baumstruktur bei der Auswahl der Anwendungsobjekte selbst zu verwenden. Anhand der Baumstruktur kann die Filterbedingung bereits im Bedienrechner so festgelegt werden, daß nur bestimmte Objektklassen von der Wartungsnachricht betroffen werden. Will der Betreiber des Telekommunikationsnetzes auf eine Vielzahl von Anwendungsobjekten zugreifen, so kann er dies durch Berücksichtigung der Baumstruktur beim Formulieren der Filterbedingungen auf sehr überschaubare Art und Weise tun. Andererseits wird die Baumstruktur auch im Vermittlungsrechner berücksichtigt, indem anhand der Baumstruktur beispielsweise die Objektklassen einer bestimmten Teilstruktur von einem zugeordneten Anwendungsprogramm bearbeitet werden. Die Zuordnung der Anwendungsprogramme zu den Teilstrukturen hat außerdem keinen Einfluß auf das Formulieren der Filterbedingungen im Bedienrechner.

In einer Weiterbildung des erfindungsgemäßen Verfahrens ist in der Filterbedingung für mindestens ein Objektdatum ein Wert festgelegt. Beispielsweise wird das Objektdatum durch einen Bezeichner festgelegt. Die Vorauswahl erfolgt anhand des Bezeichners ohne den Wert zu berücksichtigen. Erst bei der Endauswahl wird dann auch der in der Filterbedingung festgelegte Wert verwendet. Somit werden bei der Vorauswahl nur Objektklassen ausgewählt. Anwendungsobjekte und deren Objektdaten werden bei der Vorauswahl nicht berücksichtigt. Dies führt zu einer schnellen Vorauswahl.

Beim Abarbeiten des Schnittstellenprogramms wird in einer anderen Weiterbildung eine Klassendatenbank verwendet, in der für die Objektklassen jeweils die Objektdaten und mindestens ein Anwendungsprogramm zum Bearbeiten von Anwendungsobjekten der jeweiligen Klasse gegeben sind. Die Klassendatenbank ist im Vergleich zur Datenbank mit den Anwendungsobjekten klein. Dies hat zur Folge, daß die Vorauswahl auf einfache Art und Weise sehr schnell erfolgen kann.

Enthält die Filterbedingung bei einer anderen Weiterbildung logische Verknüpfungsoperationen, wie die UND-, die ODERoder die NICHT-Operation, so wird bei der Vorauswahl die logische Struktur der Filterbedingung ausgewertet. Vorzugsweise wird die konjunktive Normalform oder die disjunktive Normalform verwendet. Durch das Verwenden der Normalform läßt sich die Vorauswahl schneller durchführen.

Die Vorauswahl läßt sich weiter vereinfachen, wenn NICHT-Operationen, die sich auf bestimmte Angaben beziehen, durch den logischen Wert "WAHR" ersetzt werden, bevor die Vorauswahl durchgeführt wird. In der Filterbedingung angegebene Werte werden vorzugsweise durch einen Standardwert ersetzt, der anzeigt, daß das in der Filterbedingung angegebene Objektdatum vorhanden sein soll, ohne daß es auf den Wert selbst ankommt. Dadurch wird erreicht, daß im Schnittstellenprogramm die Werte der Objektdaten in den Anwendungsobjekten nicht bekannt sein müssen, um die Vorauswahl durchzuführen. Es muß lediglich bekannt sein, welche Objektdaten in welchem Anwendungsobjekt auftreten. Somit muß das Schnittstellenprogramm bei Änderung der Objektdaten in einem Anwendungsobjekt nicht informiert werden.

Die Erfindung betrifft außerdem ein Netzelement für ein Telekommunikationsnetz, das einen Programmspeicher und mindestens einen Prozessor zum Ausführen der Verfahrensschritte des erfindungsgemäßen Verfahrens hat. Somit gelten die oben genannten technischen Wirkungen auch für das erfindungsgemäße Netzelement.

Im folgenden werden Ausführungsbeispiel der Erfindung anhand der beiliegenden Zeichnungen erläutert. Darin zeigen:

Figur 1 das Bearbeiten von Wartungsnachrichten in einem Vermittlungsrechner,

Figur 2 eine Baumstruktur zum Festlegen der Beziehungen von Anwendungsobjekten,

Figur 3 bei einer Vorauswahl verwendete Datenstrukturen zum Auswerten einer in der Wartungsnachricht enthaltenen Filterbedingung, und

Figuren 4a und 4b ein Flußdiagramm für die bei der Vorauswahl durchgeführten Verfahrensschritte.

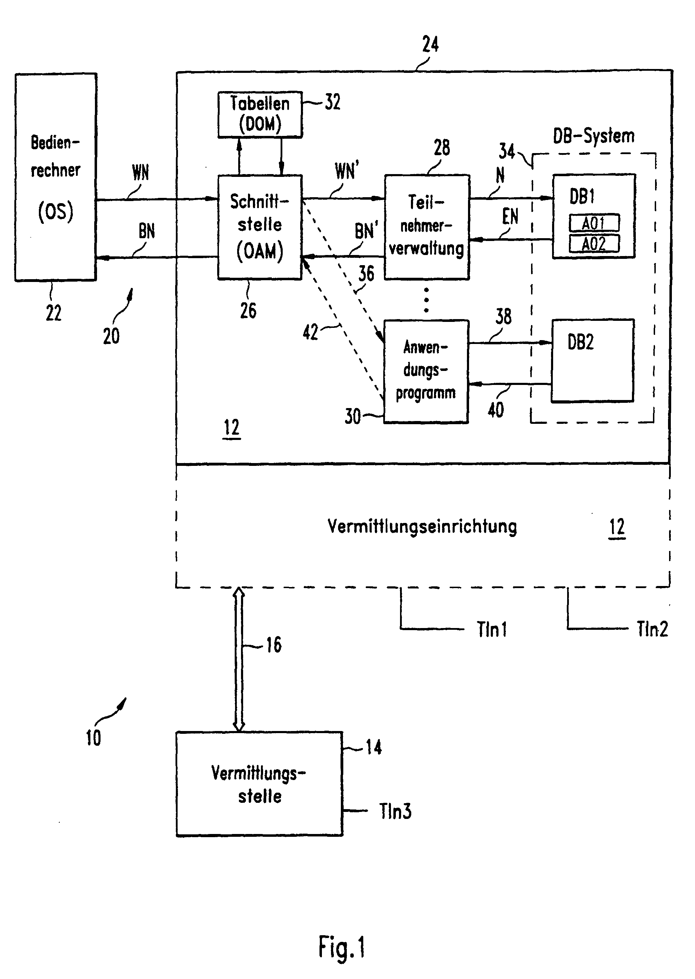

Figur 1 zeigt ein Telekommunikationsnetz 10, kurz Tk-Netz 10 genannt. Das Tk-Netz 10 enthält eine Vielzahl von Vermittlungsstellen, von denen in Figur 1 Vermittlungsstellen 12 und 14 dargestellt sind. Zum Tk-Netz 10 gehören weiterhin Verbindungsleitungen zwischen den Vermittlungsstellen, von denen in Figur 1 eine Verbindungsleitung 16 zwischen der Vermittlungsstelle 12 und der Vermittlungsstelle 14 gezeigt ist. Das Tk-Netz 10 verbindet die Teilnehmer des Tk-Netzes 10, beispielsweise an die Vermittlungsstelle 12 angeschlossene Teilnehmer Tln1 und Tln2 sowie an die Vermittlungsstelle 14 angeschlossene Teilnehmer Tln3 untereinander.

Das Tk-Netz 10 enthält ein eigenes Führungsnetz zum Warten der Vermittlungsstellen 12 und 14. Eine Übertragungsstrecke 20 des Führungsnetzes verbindet die Vermittlungsstelle 12 mit einem Bedienrechner 22. Die Übertragungsstrecke 20 überträgt Wartungsnachrichten WN vom Bedienrechner 22 zur Vermittlungsstelle 12, um beispielsweise in der Vermittlungsstelle 12 Teilnehmerdaten des Teilnehmers Tln1 zu ändern. Die Vermittlungsstelle 12 sendet ihrerseits Bestätigungsnachrichten BN an den Bedienrechner 22, um die ordnungsgemäße Bearbeitung der empfangenen Wartungsnachricht WN zu signalisieren.

Die Wartungsnachrichten WN werden in der Vermittlungsstelle 12 von einem Vermittlungsrechner 24 bearbeitet. Im Speicher des Vermittlungsrechners 24 ist ein Schnittstellenprogramm 26 gespeichert, bei dessen Abarbeiten durch einen Mikroprozessor die Wartungsnachrichten WN bearbeitet werden. Das Schnittstellenprogramm 26 ist die Schnittstelle zwischen dem Bedienrechner 22 und mehreren im Vermittlungsrechner 24 gespeicherten Anwendungsprogrammen, von denen in Figur 1 zwei Anwendungsprogramme 28 und 30 gezeigt sind. Das Anwendungsprogramm 28 dient zum Verwalten der zu den an die Vermittlungsstelle 12 angeschlossenen Teilnehmern Tln1, Tln2 gehörenden Daten. Diese Daten sind in Anwendungsobjekten AO1 bzw. AO2 gespeichert. Das Anwendungsprogramm 30 wird zur Verkehrsmessung verwendet, um festzustellen, wie stark bestimmte Übertragungsstrecken 16 genutzt werden.

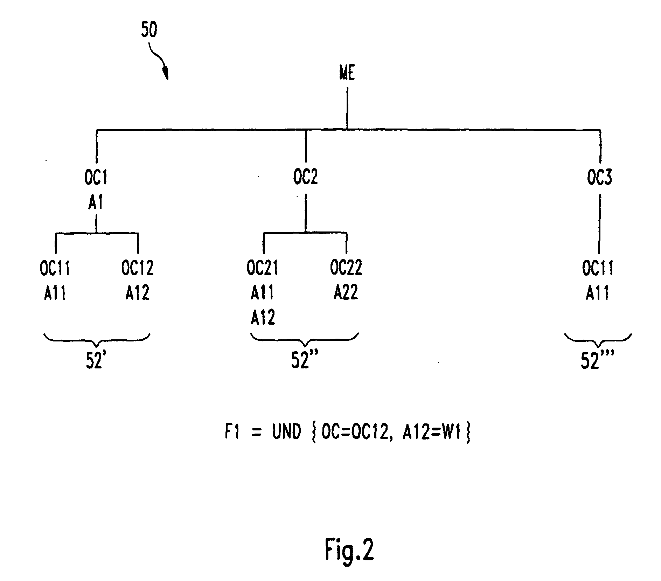

In der Wartungsnachricht WN ist zur Auswahl bestimmter Anwendungsobjekte AO1, AO2 eine Filterbedingung F1 angegeben, die unten anhand der Figur 2 noch genauer erläutert wird. Beim Abarbeiten des Schnittstellenprogramms 26 wird anhand der Filterbedingung F1 eine Vorauswahl getroffen, bei der Anwendungsprogramme 28, 30 bestimmt werden, die für das Bearbeiten der Wartungsnachricht WN in Frage kommen. Dies können nur solche Anwendungsprogramme sein, die Anwendungsobjekt AO1, AO2 bearbeiten können, deren Daten die Filterbedingung F1 in der Wartungsnachricht WN erfüllen.

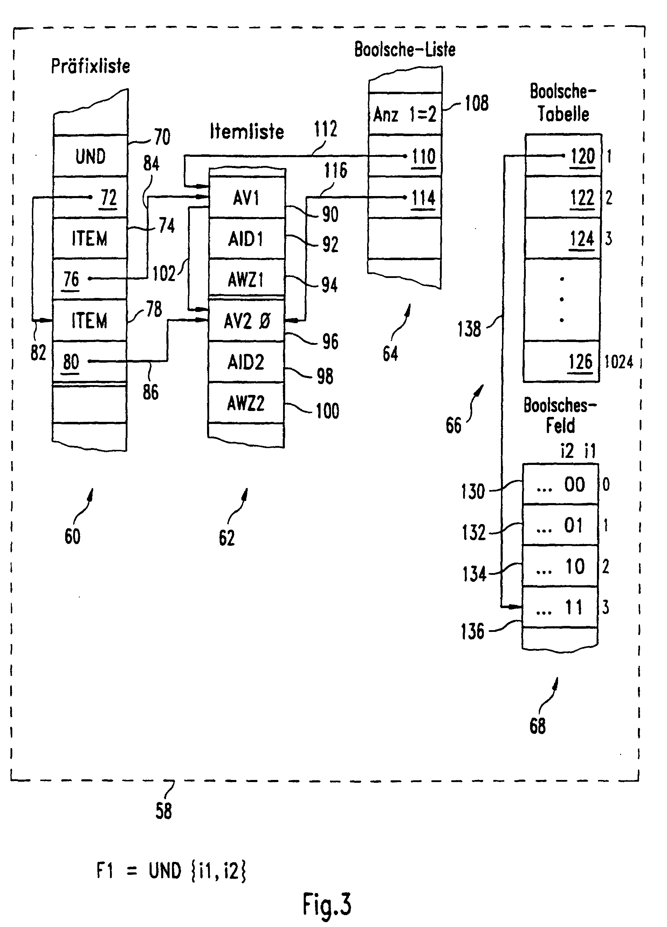

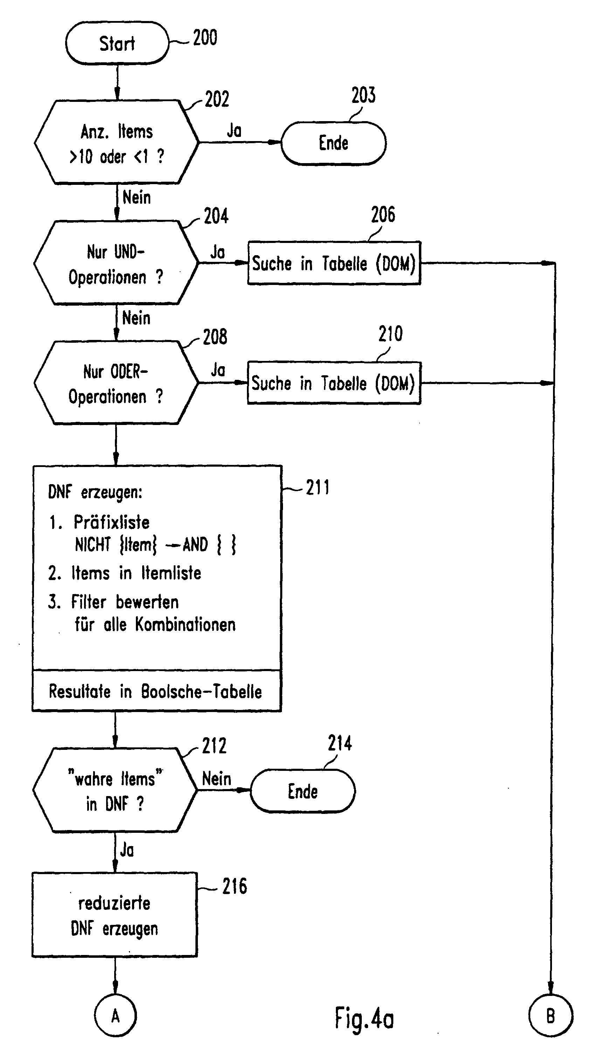

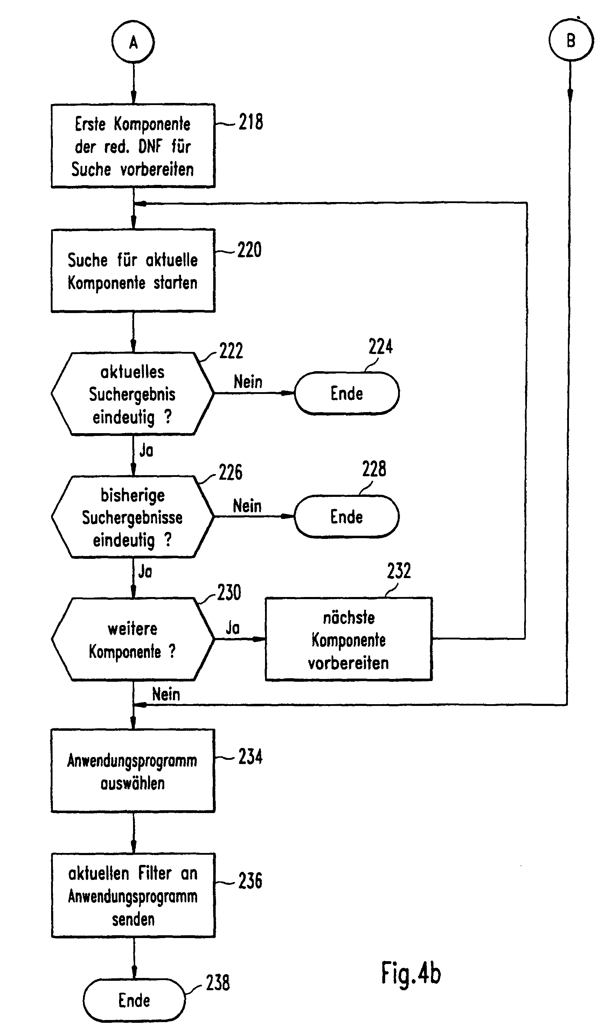

Bei der Vorauswahl greift das Schnittstellenprogramm 26 auf eine Klassendatenbank 32 zu, in der für die Objektklassen jeweils die Objektdaten und mindestens ein Anwendungsprogramm 28, 30 zum Bearbeiten von Anwendungsobjekten der jeweiligen Klasse angegeben sind. Die bei der Vorauswahl verwendeten Datenstrukturen werden unten anhand der Figur 3 erläutert. Die bei der Vorauswahl ausgeführten Verfahrensschritte werden unten anhand des in den Figuren 4a und 4b dargestellten Flußdiagramms erläutert.

Im Ausführungsbeispiel der Figur 1 wird das Anwendungsprogramm 28 beim Abarbeiten des Schnittstellenprogramms 26 ausgewählt. Das Schnittstellenprogramm 26 sendet deshalb die Wartungsnachricht WN als Wartungsnachricht WN' an das Anwendungsprogramm 28. Im Anwendungsprogramm 28 wird ein durch die Wartungsnachricht WN' festgelegter Befehl ausgeführt. Dabei arbeitet das Anwendungsprogramm 28 mit einem Datenbankprogramm 34 zusammen, mit dem Anwendungsobjekte AO1, AO2 im Speicher des Vermittlungsrechner 24 verändert, gelöscht oder gelesen werden. Dazu sendet das Anwendungsprogramm 28 Anforderungen N in Form von Nachrichten an das Datenbankprogramm 34. Nach dem Ausführen der Anforderung N sendet das Datenbankprogramm 34 seinerseits eine Ergebnisnachricht EN an das Anwendungsprogramm 28.

Das Anwendungsprogramm 28 ermittelt die Anwendungsobjekte AO1, AO2, deren Daten die in der Wartungsnachricht WN' angegebene Filterbedingung erfüllen. Nur hinsichtlich dieser Anwendungsobjekte wird der in der Wartungsnachricht WN' festgelegte Befehl ausgeführt, beispielsweise ein Lesezugriff, ein Schreibzugriff oder das Löschen eines Anwendungsobjektes.

Hat das Anwendungsprogramm 28 den in den Wartungsnachricht WN' angegebenen Befehl ausgeführt, so sendet es an das Schnittstellenprogramm 26 eine Bestätigungsnachricht BN', um die ordnungsgemäße bzw. die fehlerhafte Ausführung des Befehls zu signalisieren. Das Schnittstellenprogramm 26 leitet die Bestätigungsnachricht BN' als Bestätigungsnachricht BN an den Bedienrechner 22 weiter.

Wird bei der Vorauswahl im Schnittstellenprogramm 26 das Anwendungsprogramm 30 ausgewählt, so wird die betreffende Wartungsnachricht an das Anwendungsprogramm 30 gesendet, vgl. Pfeil 36. Das Anwendungsprogramm 30 arbeitet ebenfalls mit dem Datenbankprogramm 34 zusammen, jedoch greift es auf andere Anwendungsobjekte zu als das Anwendungsprogramm 28, vgl. Pfeile 38 und 40. Nach dem Bearbeiten einer Wartungsnachricht sendet auch das Anwendungsprogramm 30 eine Bestätigungsnachricht an das Schnittstellenprogramm 26, vgl. Pfeil 42.

Figur 2 zeigt eine Baumstruktur 50 zum Festlegen der Beziehungen von Anwendungsobjekten bzw. von Objektklassen OC1 bis OC3 und OC11 bis OC22. Derartige Baumstrukturen werden im Standard X.720 (01/92) "Data Communication Networks - Information Technology - Open Systems Interconnection - Structure of Management Information: Management Information Model" der ITU-T in Abschnitt 6 erläutert. Eine Objektklasse ME bildet den Ausgangspunkt für die Baumstruktur 50. Zur Objektklasse ME gehört in jeder vermittlungstechnischen Einrichtung nur ein Anwendungsobjekt, das allgemeine Daten über die jeweilige vermittlungstechnische Einrichtung enthält. Auf einer ersten Ebene der Baumstruktur 50 befinden sich die Objektklassen OC1 bis OC3. Beim Erzeugen von Anwendungsobjekten der Objektklassen OC1 bis OC3 ist das Anwendungsobjekt der Objektklasse ME anzugeben. Aus diesem Grund ist es üblich, davon zu sprechen, das die Anwendungsobjekte der Objektklassen OC1 bis OC3 als sogenannte untergeordnet Anwendungsobjekte in der Objektklasse ME enthalten sind.

Eine zweite Ebene der Baumstruktur 50 enthält die Objektklasse OC11 bis OC22. Eine erste Teilstruktur 52' wird durch die Objektklassen OC1, OC11 und OC12 gebildet, da beim Erzeugen von Anwendungsobjekten der Objektklasse OC11 und OC12 ein Anwendungsobjekt der übergeordneten Objektklasse OC1 anzugeben ist. Eine Teilstruktur 52'' enthält Objektklassen OC21 und OC22, die als übergeordnete Klasse die Objektklasse OC2 haben. Eine dritte Teilstruktur 52''' enthält wiederum die Objektklasse OC11, wobei jedoch die Objektklasse OC3 die übergeordnete Klasse ist. Beim Erzeugen eines Anwendungsobjektes der Teilstruktur 52''' muß ein Anwendungsobjekt der übergeordneten Klasse OC3 angegeben werden.

Außerdem sind in Figur 2 Bezeichner für ausgewählte Objektdaten angegeben, die für die Objektklassen OC1 bis OC3 sowie OC11 bis OC22 definiert sind. Die Objektklasse OC1 enthält ein Objektdatum A1. Die Objektklasse OC11 enthält ein Objektdatum A11, und die Objektklasse OC12 enthält ein Objektdatum A12. Die Objektklasse OC21 enthält wie bereits die Objektklasse OC11 das Objektdatum A11 sowie auch das Objektdatum A12. Die Objektklasse OC22 enthält ein Objektdatum A22.

Die Baumstruktur 50 ist auch im Bedienrechner 22 bekannt, vgl. Figur 1. Der Betreiber des Tk-Netzes 10 verwendet die Baumstruktur 50 beim Warten des Tk-Netzes 10 zum Auswählen bestimmter Anwendungsobjekte in den Vermittlungsstellen 12, 14. In der Wartungsnachricht WN, vgl. Figur 1, ist folgende Filterbedingung F1 angegeben:

$$F1 = UND\{OC = OC12, A12 = W1\},$$

wobei UND die logische UND-Operation, OC ein Bezeichner für die Objektklasse und W1 ein Wert für das Objektdatum A12 sind. In der Filterbedingung F1 legt der Betreiber fest, daß er nur auf Anwendungsobjekte zugreifen möchte, bei denen das Objektdatum A12 den Wert W1 hat.

Im Vermittlungsrechner 24 der Vermittlungsstelle 12 wird bei der Vorauswahl die Baumstruktur 50 ebenfalls berücksichtigt. Die Baumstruktur 50 ist implizit in der Klassendatenbank 32 vermerkt. Außerdem wird eine Vorauswahl nur dann fehlerfrei durchgeführt, wenn nur Anwendungsobjekte einer Teilstruktur 52', 52'' bzw. 52''' von der Filterbedingung F1 betroffen sind. Dies wird unten anhand der Figuren 4a und 4b noch näher erläutert.

Figur 3 zeigt in einem Speicher 58 des Vermittlungsrechners 24 eine Präfixliste 60, eine Itemliste 62, eine Boolesche Liste 64, eine Boolesche Tabelle 66 und ein Boolesches Feld 68, die bei der Vorauswahl zum Auswerten der Filterbedingung F1 verwendet werden. In der Präfixliste 60 wird die Struktur des Filters F1 vermerkt.

Die Präfixliste 60 enthält Datenfelder 70 bis 80 zur Beschreibung des Filters F1. Im Datenfeld 70 ist der Operand UND verschlüsselt gespeichert. Ein nachfolgender Adreßverweis im Datenfeld 72 zeigt auf das letzte Item, das von der UND-Operation erfaßt wird, d.h. auf das Item i2, vgl. Pfeil 82. Im Datenfeld 74 ist vermerkt, daß nun im Filter F1 ein Item folgt. Ein Adreßverweis im darauffolgenden Datenfeld 76, vgl. Pfeil 84, verweist auf das Item i1 in der Itemliste 62. Im Datenfeld 78 ist wiederum der Hinweis auf ein Item vermerkt. Ein Adreßverweis im folgenden Datenfeld 80 verweist auf das zugehörige Item i2 in der Itemliste 62, vgl. Pfeil 86.

In der Itemliste 62 gehören drei Datenfelder 90 bis 94 zum Item i1, und drei Datenfelder 96 bis 100 gehören zum Item i2. Im Datenfeld 90 ist ein durch einen Pfeil 102 dargestellter Adreßverweis AV1 auf das zweite Element der Itemliste 62 für das Item i2 gespeichert. Im Datenfeld 92 ist ein Attributkennzeichen AID gespeichert, das kennzeichnet, welches Objektdatum durch das erste Item i1 betroffen ist. Im Ausführungsbeispiel ist dies die Objektklasse OC. Im Datenfeld 94 ist der Wert AWZ1 des Attributs im Item i1 angegeben, d.h. im Ausführungsbeispiel ein Wert für die Objektklasse OC12. Im Datenfeld 96 ist ein Adressverweis AV2 gespeichert, der einen sogenannten Nullzeiger enthält, um das Ende der Itemliste 62 zu kennzeichnen. Der Nullzeiger wird beispielsweise durch die Adresse Null dargestellt.

Im Datenfeld 98 befindet sich ein Attributkennzeichen AID2, welches das Objektdatum angibt, auf das sich das Item i2 bezieht. Im Ausführungsbeispiel ist dies das Objektdatum A12. Im Datenfeld 100 ist der Wert gespeichert, den das Objektdatum A12 gemäß Filter F1 haben soll. Im Ausführungsbeispiel ist dies der Wert W1.

Der in Figur 3 dargestellte Ausschnitt der Booleschen Liste 64 bezieht sich ebenfalls auf den Filter F1. In einem Datenfeld 108 ist die Anzahl der Items i1, i2 in der Filterbedingung F1 vermerkt, d.h. der Wert Zwei. In einem nächsten Datenfeld 110 der Booleschen Liste 64 ist ein Adressverweis auf das erste Item i1 der Itemliste 62 vermerkt, vgl. Pfeil 112. In einem Datenfeld 114 der Booleschen Liste 64 ist ein Adreßverweis auf das Item i2 in der Itemliste 62 gespeichert, vgl. auch Pfeil 116.

Auf das erste Datenfeld 90 des ersten Items i1 der Itemliste 62 kann sowohl von der Präfixliste 60 aus über den Adreßverweis im Datenfeld 76 als auch von der Booleschen Liste 64 aus über den Adreßverweis im Datenfeld 110 zugegriffen werden. Entsprechend kann von der Präfixliste 60 aus über den Adreßverweis im Datenfeld 80 sowie von der Booleschen Liste 64 aus über den Adressverweis im Datenfeld 114 auf das Item i2 der Itemliste 62 zugegriffen werden.

Beim Abarbeiten eines Auswertungsprogramms werden alle Kombinationen von logischen Werten für die Items i1, i2 des Filters F1 daraufhin geprüft, ob die Filterbedingung F1 erfüllt ist. Ist die Filterbedingung bei einer Kombination erfüllt, so wird ein Verweis auf die jeweilige Kombination in einem Datenfeld 120 der Booleschen Tabelle gespeichert. Bei der Filterbedingung F1 ist die Filterbedingung nur erfüllt, wenn beide Item i1 und i2 den logischen Wert "WAHR" haben. Deshalb gibt es in der Booleschen Tabelle 66 nur den Adreßverweis im Datenfeld 120. In weiteren Datenfeldern 122 bis 126 der Booleschen Tabelle 66 lassen sich weitere Adreßverweise speichern.

Im Booleschen Feld 68 sind in vier Datenfeldern 130 bis 136 die Kombinationen für die Items i1 und i2 vermerkt. Die Filterbedingung F1 ist, wie bereits erwähnt, nur erfüllt, wenn sowohl das Item i1 als auch das Item i2 den logischen Wert "WAHR" hat. Bei der Filterbedingung F1 verweist deshalb nur der Adreßverweis im Datenfeld 120 der Booleschen Tabelle 66, nämlich der Adreßverweis auf die Kombination "11" im Datenfeld 136 des Booleschen Feldes 68, vgl. Pfeil 138. Die Kombination "11" besagt, daß beide Items i1 und i2 den logischen Wert "WAHR" haben. Die Adreßverweise in der Booleschen Tabelle 66 beschreiben letztlich die disjunktive Normalform DNF der Filterbedingung F1.

Figuren 4a und 4b zeigen ein Flußdiagramm für die bei der Vorauswahl ausgeführten Verfahrensschritte. Dabei werden die anhand der Figur 3 erläuterten Datenstrukturen verwendet, so daß beim Erläutern der Figur 4 auch auf die Figur 3 Bezug genommen wird. Das Verfahren beginnt in einem Schritt 200. Im folgenden Schritt 202 wird überprüft, ob die Anzahl der Items in der Filterbedingung F1 größer 10 oder kleiner als 1 ist. Liegt die Anzahl der Items außerhalb dieses Bereiches, so wird das Verfahren in einem Schritt 203 beendet, da sich mehr als 10 Filteritems nur mit einem unverhältnismäßig großen Rechenaufwand auswerten lassen. Bei einer Itemanzahl kleiner als 1 muß offensichtlich ein Fehler vorliegen. Liegt die Anzahl der Items in der zu bearbeitenden Filterbedingung zwischen einem und zehn Items, so folgt unmittelbar nach dem Schritt 202 ein Schritt 204.

Im Verfahrensschritt 204 wird geprüft, ob in der Filterbedingung nur UND-Operationen auftreten. Ist dies der Fall, so wird eine vereinfachte Suche in der Klassendatenbank 32 gemäß Figur 1 durchgeführt, vgl. Verfahrensschritt 206. Wird dagegen im Verfahrensschritt 204 festgestellt, daß nicht nur UND-Operationen in der Filterbedingung enthalten sind, so folgt unmittelbar nach dem Schritt 204 ein Verfahrensschritt 208.

Im Verfahrensschritt 208 wird geprüft, ob die zu bearbeitende Filterbedingung ausschließlich ODER-Operationen enthält. Ist dies der Fall, so erfolgt in einem Verfahrensschritt 210 eine vereinfachte Suche in der Klassendatenbank 32, vgl. Figur 1. Wird dagegen im Schritt 208 festgestellt, daß nicht nur ODER-Operationen in der Filterbedingung enthalten sind, so wird die disjunktive Normalform DNF erzeugt, vgl. Verfahrensschritt 211.

Im Verfahrensschritt 211 werden zuerst in der Präfixliste 60 alle NICHT-Operationen durch den Wert "WAHR" ersetzt. Dies erfolgt, indem anstelle der Operanden NICHT{Item} jeweils der Operand UND{} gesetzt wird, der immer den logischen Wert "WAHR" ergibt. Anschließend werden die Items in der Itemliste 62 und in der Booleschen Liste 64 eingetragen. In einem letzten Teil des Verfahrensschritts 210 wird der zu bearbeitende Filter für alle Kombinationen der Items bewertet. Die Kombinationen, bei denen die Filterbedingung erfüllt ist, werden in die Boolesche Tabelle 66 eingetragen.

Nach dem Verfahrensschritt 210 wird in einem Verfahrensschritt 212 geprüft, ob es Kombinationen gibt, für die Filterbedingung erfüllt ist. Gibt es in der Booleschen Tabelle keine Einträge, so wird das Verfahren im Schritt 214 beendet, da die Filterbedingung offensichtlich durch kein Anwendungsobjekt zu erfüllen ist. Wird im Verfahrensschritt 212 festgestellt, daß es Einträge in der Booleschen Tabelle 66 gibt, so folgt unmittelbar ein Verfahrensschritt 216.

Im Verfahrensschritt 216 wird aus der durch die Eintragungen in der Booleschen Tabelle 66 angegebenen disjunktiven Normalform eine durch mathematisches Ausklammern von Items eine sogenannte reduzierte disjunktive Normalform erzeugt, die meist weniger Kombinationen als die disjunktive Normalform DNF enthält. Die Zahl der Einträge in der Booleschen Tabelle wird demzufolge im Verfahrensschritt 216 meist verringert.

Im folgenden Verfahrensschritt 218 wird die erste Kombination der reduzierten disjunktiven Normalform DNF für die Suche in der Klassendatenbank 32 vorbereitet. Dazu wird die betreffende Kombination "11" aus dem Booleschen Feld 68 gelesen. In der Kombination "11" sind den Bitstellen nach ihrer Position bestimmte Items zugeordnet. Die rechte Bitstelle gehört zum Item i1, und die links daneben liegende Bitstelle gehört zum Item i2. An beiden Bitstellen steht in der Kombination "11" eine Eins. Deshalb werden beide Items i1 und i2 beim aktuellen Suchvorgang berücksichtigt. Anhand des Attributkennzeichens AID1 wird erkannt, daß im Item i1 eine Objektklasse OC angegeben ist. Demzufolge wird die Objektklasse OC12 über den Wert AWZ1 bestimmt. Anhand des Attributkennzeichens AID2 wird erkannt, daß Item i2 ein Objektdatum betrifft, nämlich das Objektdatum A12. Das Objektdatum A12 wird bei der Suche verwendet. Im Verfahrensschritt 218 wird der Wert AWZ2 nicht berücksichtigt. Es wird anstelle des Wertes AWZ2 ein Operand "VORHANDEN" verwendet. Somit kann die Auswertung der Filterbedingung F1 durch das Schnittstellenprogramm 26, vgl. Figur 1, erfolgen, ohne daß der Wert AWZ2 anhand der Objektdaten der Anwendungsobjekte geprüft werden müßte. Der Wert AWZ1 wird dagegen deshalb im Verfahrensschritt 218 verwendet, weil die Objektklassen in der Klassendatenbank 32 vermerkt sind.

In einem Verfahrensschritt 220 wird anhand der Attributkennzeichen und anhand der aus dem Booleschen Feld 68 gelesenen Kombination die Suche in der Klassendatenbank 32 durchgeführt. Dabei wird die Objektklasse OC12 gesucht, die das durch das Attributkennzeichen AID2 angegebene Objektdatum enthält. Gefunden wird die Objektklasse OC12. Die Filterbedingung F1 wurde für das Ausführungsbeispiel einfach gewählt. Meist werden Filterbedingungen mit mehr als zwei Items verwendet, bei denen das Suchergebnis nicht so überschaubar ist, wie bei der Filterbedingung F1.

Im folgenden Verfahrensschritt 222 wird geprüft, ob die im Verfahrensschritt 220 gefundenen Objektklassen in einer gemeinsamen Teilstruktur 52', 52 " bzw. 52''' der Baumstruktur 50 enthalten sind, vgl. auch Figur 2. Erfüllen die Objektklassen mehrerer Teilstrukturen 52', 52'' bzw. 52''' die zu bearbeitende Filterbedingung, so folgt nach dem Verfahrensschritt 222 ein Verfahrensschritt 224, in welchem das Verfahren abgebrochen wird. An den Bedienrechner 22 wird eine Fehlermeldung gesendet, in der mitgeteilt wird, daß die Filterbedingung zu komplex ist. Wird dagegen im Verfahrensschritt 222 festgestellt, das keine Objektklassen gefunden worden sind oder daß im Verfahrensschritt 220 gefundene Objektklassen in einer Teilstruktur 52', 52 " bzw. 52''' enthalten sind, so folgt unmittelbar nach dem Verfahrensschritt 222 ein Verfahrensschritt 226.

Im Verfahrensschritt 226 wird unter Berücksichtigung aller für die zu bearbeitende Filterbedingung bisher im Verfahrensschritt 220 durchgeführten Suchschritte geprüft, ob die gefundenen Anwendungsobjekte in einer gemeinsamen Teilstruktur 52', 52'' bzw. 52''' der Baumstruktur 50 enthalten sind. Ist dies nicht der Fall, so folgt nach dem Verfahrensschritt 226 ein Verfahrensschritt 228, in dem das Verfahren abgebrochen wird. Dabei wird wiederum an den Bedienrechner 22 eine Meldung gesendet, in der mitgeteilt wird, daß die Filterbedingung zu komplex ist. Wird im Verfahrensschritt 226 dagegen festgestellt, daß die bisher gefundenen Anwendungsobjekte in einer Teilstruktur 52', 52'' bzw. 52''' enthalten sind, so folgt unmittelbar nach dem Verfahrensschritt 226 ein Verfahrensschritt 230.

Im Verfahrensschritt 230 wird geprüft, ob es noch weitere Einträge in der Booleschen Tabelle 66 gibt, d.h. ob die reduzierte disjunktive Normalform DNF noch weitere Kombinationen enthält. Ist dies der Fall, so folgt nach dem Verfahrensschritt 230 ein Verfahrensschritt 232, in welchem die nächste Kombination für die Suche vorbereitet wird. Dabei wird die betreffende Kombination aus dem Booleschen Feld 68 gelesen. Außerdem werden wiederum die Attributkennzeichen AID aus der Itemliste 62 verwendet. Anschließend wird das Verfahren im Verfahrensschritt 220 fortgesetzt.

Das Verfahren befindet sich nun in einer Schleife aus den Verfahrensschritten 220 bis 232. Treten in den Verfahrensschritten 224 und 228 keine Fehlermeldungen auf, so wird die Schleife im Verfahrensschritt 230 erst beendet, nachdem alle Kombinationen der reduzierten disjunktiven Normalform DNF bearbeitet worden sind. In diesem Fall folgt unmittelbar nach dem Verfahrensschritt 230 ein Verfahrensschritt 234.

Im Verfahrensschritt 234 wird ermittelt, in welcher Teilstruktur 52', 52'' bzw. 52''' der Baumstruktur 50 sich die gefundenen Anwendungsobjekte befinden. Für jede Teilstruktur 52', 52'' und 52''' ist jeweils ein Anwendungsprogramm vorgesehen. Im Verfahrensschritt 234 wird dasjenige Anwendungsprogramm ausgewählt, das zu der Teilstruktur 52', 52'' bzw. 52''' gehört, in der die Anwendungsobjekte gefunden worden sind. Der Verfahrensschritt 234 wird auch unmittelbar nach dem Verfahrensschritt 206 bzw. 210 ausgeführt, wenn in der Filterbedingung nur UND-Operationen oder nur ODER-Operationen vorhanden sind.

Nach dem Verfahrensschritt 234 folgt unmittelbar ein Verfahrensschritt 236, in welchem die bearbeitete Filterbedingung an das im Verfahrensschritt 234 ausgewählte Anwendungsprogramm gesendet wird. Das ausgewählte Anwendungsprogramm wählt dann ebenfalls anhand der Filterbedingung einzelne Anwendungsobjekte aus und bearbeitet dieses Anwendungsobjekt gemäß dem in der Wartungsnachricht vorgegebenen Befehl. In einem Verfahrensschritt 238 wird das Verfahren beendet.

In einem weiteren Ausführungsbeispiel enthält die Wartungsnachricht WN eine Filterbedingung:

$$F2 = UND\{OC = OC12, NICHT\{A12 = W1\}\},$$

wobei die verwendeten Items und Operationen im wesentlichen denen der Filterbedingung F1 entsprechen. Die NICHT-Operation ist ein logischen NICHT, d.h. es werden Anwendungsobjekte gesucht, die das Argument der NICHT-Operationen gerade nicht enthalten. Das bedeutet, daß Anwendungsobjekte der Anwendungsklasse OC12 gesucht werden, deren Objektdatum A12 nicht den Wert W1 hat. Beim Bearbeiten der Filterbedingung F2 wird im Verfahrensschritt 210 die NICHT-Operation durch die Operation UND{} ersetzt. Durch diese Maßnahme wird gewährleistet, daß bei der Suche alle in Frage kommenden Anwendungsobjekte erfaßt werden, obwohl nicht auf den exakten Wert W1 Bezug genommen wird, sondern nur auf das Vorhandensein des zugehörigen Objektdatums A12 abgestellt wird.

In einem anderen Ausführungsbeispiel enthält die Wartungsnachricht WN eine Filterbedingung:

$$F3 = UND\{A11 = W1, A12 = W2\}.$$

Gemäß Figur 2 wird bei der Filterbedingung F3 in der Vorauswahl die Objektklasse OC21 ermittelt. In der Endauswahl werden die Anwendungsobjekte der Objektklasse OC21 ausgewählt, bei denen das Objektdatum A11 den Wert W1 und das Objektdatum A12 einen Wert W2 hat.

**Patentansprüche**

1. Verfahren zum Betreiben eines Telekommunikationsnetzes (10),
   bei dem an einem Netzknoten eines Telekommunikationsnetzes (10) eine vermittlungstechnische Einrichtung (12) von einem Vermittlungsrechner (24) gesteuert wird,
   im Vermittlungsrechner (24) neben dem Betriebssystem mehrere Anwendungsprogramme (28, 30) zum Bearbeiten von Anwendungsobjekten (AO1, AO2), die je nach Zugehörigkeit zu einer Objektklasse (OC1 bis OC3) vorgegebene Objektdaten (A1, A22) enthalten,
   der Vermittlungsrechner (24) mit mindestens einer Wartungsnachricht (WN) von mindestens einem Bedienrechner (22) aus gewartet wird,
   in der Wartungsnachricht (WN) eine Filterbedingung (F1, F2) zum Auswählen bestimmter Anwendungsobjekte (AO1, AO2) enthalten ist,
   beim Abarbeiten eines für mehrere Anwendungsprogramme (28, 30) genutzten Schnittstellenprogramms (26) anhand der Filterbedingung (F1, F2) mindestens eine Objektklasse (OC11) und mindestens ein die Anwendungsobjekte (AO1, AO2) dieser Objektklasse bearbeitendes Anwendungsprogramm (28, 30) ausgewählt wird (Schritte 200 bis 238),
   und bei dem beim Abarbeiten des ausgewählten Anwendungsprogramms (28, 30) die Anwendungsobjekte (AO1, AO2) ausgewählt und bearbeitet werden.

2. Verfahren nach Anspruch 1, **dadurch gekennzeichnet, daß** die Filterbedingung (F1, F2) für mindestens ein Objektdatum (OC, A1, A22) einen Wert (OC12, AWZ1, AWZ2) festlegt,
   daß das Anwendungsprogramm (28, 30) anhand des in der Filterbedingung (F1) angegebenen Objektdatums (A1, A22) und /oder einer in der Filterbedingung (F1) angegebenen Objektklasse ausgewählt wird, und
   daß durch das ausgewählte Anwendungsprogramm die Anwendungsobjekte (AO1, AO2) ausgewählt werden, bei denen das in der Filterbedingung (F1, F2) angegebene Objektdatum (A1) den in der Filterbedingung (F1) angegebenen Wert (AWZ2, W1) hat.

3. Verfahren nach Anspruch 1 oder 2, **dadurch gekennzeichnet, daß** beim Abarbeiten des Schnittstellenprogramms (26) eine Klassendatenbank (32) verwendet wird, in der für die Objektklassen (OC1 bis OC3) jeweils die Objektdaten (A1, A11) und mindestens ein Anwendungsprogramm (28, 30) zum Bearbeiten von Anwendungsobjekten der jeweiligen Klasse angegeben sind.

4. Verfahren nach einem der vorhergehenden Ansprüche, **dadurch gekennzeichnet, daß** die Filterbedingung (F1, F2) mindestens eine logische Verknüpfungsoperation enthält, vorzugsweise die UND-, ODER-, NICHT-Operation, und daß die logische Struktur der Filterbedingung (F1, F2) beim Abarbeiten des Schnittstellenprogramms (26) ausgewertet wird, vorzugsweise durch Bilden einer Normalform (KNF, DNF) und/oder einer reduzierten Normalform (KNF, DNF).

5. Verfahren nach Anspruch 4, **dadurch gekennzeichnet, daß** vorzugsweise alle sich auf bestimmte Angaben beziehende NICHT-Operationen durch den logischen Wert "WAHR" beim Auswerten ersetzt werden.

6. Verfahren nach Anspruch 4 oder 5, **dadurch gekennzeichnet, daß** beim Auswerten der Wert in der Filterbedingung (F1, F2) durch einen vorgegebenen Standardwert (VORHANDEN) ersetzt wird, der anzeigt, daß das in der Filterbedingung (F1, F2) angegebene Objektdatum (A1, A11) in der zu ermittelnden Objektklasse vorhanden sein muß.

7. Verfahren nach einem der vorhergehenden Ansprüche, **dadurch gekennzeichnet, daß** für die Klassen eine Baumstruktur (50) definiert ist, die auf der Seite des Bedienrechners (22) und auf der Seite des Vermittlungsrechners (24) verwendet wird.

8. Verfahren nach einem der vorhergehenden Ansprüche, **dadurch gekennzeichnet, daß** das Schnittstellenprogramm (26) weitere Schnittstellenfunktionen zwischen dem Bedienrechner (22) und dem Vermittlungsrechner (24) ausführt, vorzugsweise eine Protokollumwandlung zwischen dem Nachrichtenprotokoll innerhalb und außerhalb des Vermittlungsrechners (24).

9. Verfahren nach einem der vorhergehenden Ansprüche, **dadurch gekennzeichnet, daß** ein erstes Anwendungsprogramm (28) zur Teilnehmerverwaltung,
und/oder ein zweites Anwendungsprogramm zum Verwalten von Verbindungsleitungen (16) zu anderen Vermittlungseinrichtungen (149,
und/oder ein drittes Anwendungsprogramm zur Wartung der Vermittlungseinrichtung (12, 14),
und/oder ein viertes Anwendungsprogramm (30) zur Verkehrsmessung der geschalteten Verbindungen (16) verwendet wird.

10. Verfahren nach einem der vorhergehenden Ansprüche, **dadurch gekennzeichnet, daß** die Anwendungsobjekte (AO1, AO2) je nach Objektklasse (OC) vorgegebene Verfahren zum Bearbeiten ihrer Objektdaten ausführen.

11. Netzelement (12,14) für ein Telekommunikationsnetz (12), insbesondere zum Ausführen des Verfahrens nach einem der vorhergehenden Ansprüche,
mit einem Datenspeicher zum Speichern von Anwendungsobjekten (AO1, AO2), die je nach Zugehörigkeit zu einer Objektklasse (OC1 bis OC3) vorgegebene Objektdaten (A1, A11) enthalten, einem Programmspeicher zum Speichern mehrerer Anwendungsprogramme (28, 30) und eines Schnittstellenprogramms (26),
wobei beim Abarbeiten des Anwendungsprogramms (28, 30) die Anwendungsobjekte (AO1, AO2) bearbeitet werden,
und wobei beim Abarbeiten des Schnittstellenprogramms (26) über eine Schnittstelle zu einem Bedienrechner (22) empfangene Wartungsnachrichten (WN) mit einer Filterbedingung (F1, F2) zum Auswählen bestimmter Anwendungsobjekte (AO1, AO2) an mindestens ein Anwendungsprogramm (28, 30) weitergeleitet werden,
und mit mindestens einem Prozessor zum Abarbeiten der Befehle der Anwendungsprogramme (28, 30) und des Schnittstellenprogramms (26),
**dadurch gekennzeichnet, daß** beim Abarbeiten des Schnittstellenprogramms (26) anhand der Filterbedingung (F1, F2) mindestens ein Anwendungsprogramm (28, 30) ausgewählt wird,
und daß beim Abarbeiten des ausgewählten Anwendungsprogramms (28, 30) die Anwendungsobjekte (AO1 AO2) ausgewählt und bearbeitet werden.

## Claims

1. Method for operating a telecommunication network (10), whereby a switching facility (12) at a network node of the telecommunication network (10) is controlled by a switching processor (24),
the switching processor (24) contains, apart from the operating system, several application programs (28, 30) for processing application objects (AO1, AO2) which, depending on their membership of an object class (OC1 to OC3), contain object data (A1, A22),
the switching processor (24) is maintained by at least one maintenance message (WN) from at least one operating computer (22),
the maintenance message (WN) contains a filtering condition (F1, F2) for selecting certain application objects (AO1, AO2), during the processing of an interface program (26), which is used for several application programs (28, 30), at least one object class (OC11) is selected (steps 200 to 238), together with at least one application program (28, 30) which processes the application objects (AO1, AO2) in this object class, by reference to the filtering condition (F1, F2),
and when the selected application program (28, 30) is processed, the application objects (AO1, AO2) are selected and processed.

2. Method in accordance with claim 1, **characterized in that** the filtering condition (F1, F2) defines a value (OC12, AWZ1, AWZ2) for at least one object datum (OC, A1, A22),
that the application program (28, 30) is selected by reference to the object datum (A1, A22) specified in the filtering condition (F1) and / or an object class specified in the filtering condition (F1), and
that the selected application program selects those application objects (AO1, AO2) for which the object datum (A1) specified in the filtering condition (F1, F2) has the value (AWZ2, W1) specified in the filtering condition (F1).

3. Method in accordance with claim 1 or 2, **characterized in that** when the interface program (26) is processed a class database (32) is used, in which are specified the object data (A1, A11) for each of the object classes (OC1 to OC3), and at least one application program (28, 30) for processing application objects in the class concerned.

4. Method in accordance with one of the preceding claims, **characterized in that** the filtering condition (F1, F2) contains at least one Boolean logic operation, preferably the AND, OR, NOT operation,
and that when the interface program (26) is processed the logical structure of the filtering condition (F1, F2) is evaluated, preferably by the formation of a normal form (KNF, DNF) and/or a reduced normal form (KNF, DNF).

5. Method in accordance with claim 4, **characterized in that** preferably all the NOT operations which refer to specific values are replaced by the logical value "TRUE" when the evaluation is performed.

6. Method in accordance with claim 4 or 5, **characterized in that** when the evaluation is performed the value in the filtering condition (F1, F2) is replaced by a standard value (PRESENT) which indicates that the object datum (A1, A11) specified in the filtering condition (F1, F2) must be present in the object class which is to be determined.

7. Method in accordance with one of the preceding claims **characterized in that** a tree structure (50) is defined for the classes, this being used on the part of the operating computer (22) and on the part of the switching processor (24).

8. Method in accordance with one of the preceding claims **characterized in that** the interface program (26) performs other interface functions between the operating computer (22) and the switching processor (24), preferably a protocol conversion between the messaging protocol within and outside the switching processor (24).

9. Method in accordance with one of the preceding claims **characterized in that** a first application program (28) is used for subscriber administration,
and/or a second application program for the administration of connecting links (16) to other switching facilities (14),
and/or a third application program for the maintenance of the switching facility (12, 14),
and/or a fourth application program (30) for the measurement of traffic on the connected links (16).

10. Method in accordance with one of the preceding claims **characterized in that** depending on their object class (OC) the application objects (AO1, AO2) carry out prescribed methods for processing their object data.

11. Network element (12,14) for a telecommunication network (12), in particular for carrying out the method in accordance with one of the preceding claims,
with a data memory for storing application objects (AO1, AO2) which, depending on their membership of an object class (OC1 to OC3), contain prescribed object data (A1, A11),
a program memory for storing several application programs (28, 30) and an interface program (26),
whereby when an application program (28, 30) is processed the application objects (AO1, AO2) are processed,
and whereby, when the interface program (26) is processed, maintenance messages (WN) received, together with a filtering condition (F1, F2) for selecting particular application objects (AO1, AO2), via an interface to an operating computer (22), are forwarded to at least one application program (28, 30),
and with at least one processor for processing the commands of the application programs (28, 30) and of the interface program (26),
**characterized in that** when the interface program (26) is processed at least one application program (28, 30) is selected by reference to the filtering condition (F1, F2),
and that, when the selected application program (28, 30) is processed, the application objects (AO1, AO2) are selected and processed.

**Revendications**

1. Procédé d'exploitation d'un réseau de télécommunication (10) dans lequel un dispositif technique de communication (12) situé en un noeud d'un réseau de télécommunication (10) est commandé par un calculateur de communication (24),

en plus du système d'exploitation, plusieurs programmes d'application (28, 30) de traitement d'objets d'application (AO1, AO2), qui contiennent des données d'objets (A1, A22) prédéterminées en fonction de leur appartenance à une classe d'objets (OC1 à OC3), se trouvant dans le calculateur de communication (24),

le calculateur de communication (24) étant géré par au moins un message de maintenance (WN) en provenance d'au moins un calculateur de service (22),

le message de maintenance (WN) contenant une condition de filtrage (F1, F2) pour la sélection d'objets d'application (AO1, AO2) définis,

lors de l'exécution d'un programme d'interface (26) utilisé pour plusieurs programmes d'application (28, 30), au moins une classe d'objets (OC11) et au moins un programme d'application (28, 30) qui traite les objets d'application (AO1, AO2) de cette classe d'objets étant sélectionnés à l'aide de la condition de filtrage (F1, F2) (étapes 200 à 238),

et dans lequel, lors de l'exécution du programme d'application (28, 30) sélectionné, les objets d'application (AO1, AO2) sont sélectionnés et traités.

2.  Procédé selon la revendication 1, **caractérisé en ce que** la condition de filtrage (F1, F2) définit une valeur (OC1, AWZ1, AWZ2) pour au moins une donnée d'objet (OC, A1, A22),

**en ce que** le programme d'application (28, 30) est sélectionné à l'aide de la donnée d'objet (A1, A22) indiquée dans la condition de filtrage (F1) et/ou d'une classe d'objets indiquée dans la condition de filtrage (F1) et

**en ce que** le programme d'application sélectionné sélectionne les objets d'application (AO1, AO2) pour lesquels la donnée d'objet (A1) indiquée dans la condition de filtrage (F1, F2) a la valeur (AWZ2, W1) indiquée dans la condition de filtrage (F1).

3.  Procédé selon la revendication 1 ou 2, **caractérisé en ce que** lors de l'exécution du programme d'interface (26), on utilise une base de données de classe (32) dans laquelle les données d'objets (A1, A11) et au moins un programme d'application (28, 30) pour les traitements d'objets d'application de chaque classe sont indiquées pour chacune des classes d'objets (OC1 à OC3).

4.  Procédé selon l'une des revendications précédentes, **caractérisé en ce que** la condition de filtrage (F1, F2) contient au moins une opération de combinaison logique, de préférence l'opération ET, l'opération OU ou l'opération NON, et **en ce que** la structure logique de la condition de filtrage (F1, F2) est évaluée lors de l'exécution du programme interface (26), de préférence par formation d'une forme normalisée (KNF, DNF) et/ou d'une forme normalisée réduite (KNF, DNF).

5.  Procédé selon la revendication 4, **caractérisé en ce que** lors de l'évaluation, de préférence toutes les opérations NON qui concernent des données définies sont remplacées par la valeur logique "VRAI".

6.  Procédé selon la revendication 4 ou 5, **caractérisé en ce que** lors de l'évaluation, la valeur présente dans la condition de filtrage (F1, F2) est remplacée par une valeur standard prédéterminée ("PRESENT") qui indique que la donnée d'objet (A1, A11) indiquée dans la condition de filtrage (F1, F2) doit être présente dans la classe d'objets à déterminer.

7.  Procédé selon l'une des revendications précédentes, **caractérisé en ce que** l'on définit pour les classes une structure arborescente (50) qui est utilisée du côté du calculateur de service (22) et du côté du calculateur de transmission (24).

8.  Procédé selon l'une des revendications précédentes, **caractérisé en ce que** le programme d'interface (26) exécute d'autres fonctions d'interface entre le calculateur de service (22) et le calculateur de transmission (24), de préférence une conversion de protocole entre le protocole de message dans et hors du calculateur de transmission (24).

9.  Procédé selon l'une des revendications précédentes, **caractérisé en ce qu'**il utilise un premier programme d'application (28) pour l'administration des abonnés,

et/ou un deuxième programme d'application pour l'administration de lignes de liaison (16) vers d'autres dispositifs de communication (14),

et/ou un troisième programme d'application pour la maintenance du dispositif de communication (12, 14),

et/ou un quatrième programme d'application (30) pour la mesure du trafic sur les liaisons (16) raccordées.

10.  Procédé selon l'une des revendications précédentes, **caractérisé en ce que** les objets d'application (AO1, AO2)

**EP 1 072 125 B1**

exécutent des procédés prédéterminés en fonction de la classe d'objets (OC) pour le traitement de leurs données d'objets.

11. Elément de réseau (12, 14) pour un réseau de télécommunication (12), en particulier pour la mise en oeuvre du procédé selon l'une des revendications précédentes,

qui comporte une mémoire de données pour conserver des objets d'application (AO1, AO2) qui, en fonction de leur appartenance à une classe d'objets (OC1 à OC3), contiennent des données d'objets (A1 à A11) prédéterminées,

une mémoire de programme pour conserver plusieurs programmes d'application (28, 30) et un programme d'interface (26),

les objets d'application (AO1, AO2) étant traités lors de l'exécution du programme d'application (28, 30), et

lors de l'exécution du programme d'interface (26), des messages de maintenance (WN) reçus par l'intermédiaire d'une interface par un calculateur de service (22) et qui contiennent une condition de filtrage (F1, F2) pour la sélection d'objets d'application (AO1, AO2) définis étant transférés à au moins un programme d'application (28, 30),

et qui comporte au moins un processeur pour l'exécution des ordres du programme d'application (28, 30) et du programme d'interface (26),

**caractérisé en ce que** lors de l'exécution du programme d'interface (26), au moins un programme d'application (28, 30) est sélectionné à l'aide de la condition de filtrage (F1, F2)

et **en ce que** les objets d'application (AO1, AO2) sont sélectionnés et traités lors de l'exécution du programme d'application (28, 30) sélectionné.

Fig.1

$$F1 = UND \{ OC=OC12, A12=W1 \}$$

Fig.2

Präfixliste

UND — 70

84

— 72

ITEM — 74

76 — 102

ITEM — 78

80

82 — 86

60

Itemliste — 112

AV1 — 116

AID1 — 90

AWZ1 — 92

AV2 Ø — 94

AID2 — 96

AWZ2 — 98

— 100

62

Boolsche-Liste

Anz 1=2 — 108

— 110

— 114

64

Boolsche-Tabelle

— 120    1

— 122    2

124    3

.
.
.

126    1024

138

66

Boolsches-Feld

i2 i1

130 — ... 00    0

132 — ... 01    1

134 — ... 10    2

136 — ... 11    3

68

58

F1 = UND {i1, i2}

Fig.3

Start —200

Anz. Items
>10 oder <1 ? —202    Ja → Ende —203

Nein

Nur UND-
Operationen ? —204    Ja → Suche in Tabelle (DOM) —206

Nein

Nur ODER-
Operationen ? —208    Ja → Suche in Tabelle (DOM) —210

DNF erzeugen: —211

1. Präfixliste
   NICHT {Item} —AND { }

2. Items in Itemliste

3. Filter bewerten
   für alle Kombinationen

Resultate in Boolsche-Tabelle

"wahre Items"
in DNF ? —212    Nein → Ende —214

Ja

reduzierte
DNF erzeugen —216

A          Fig.4a          B

(A)

Erste Komponente
der red. DNF für
Suche vorbereiten — 218

Suche für aktuelle
Komponente starten — 220

aktuelles
Suchergebnis
eindeutig ? — 222

Nein → Ende — 224

Ja

bisherige
Suchergebnisse
eindeutig ? — 226

Nein → Ende — 228

Ja

weitere
Komponente ? — 230

Ja → nächste
Komponente
vorbereiten — 232

Nein

(B)

Anwendungsprogramm
auswählen — 234

aktuellen Filter an
Anwendungsprogramm
senden — 236

Ende — 238

Fig.4b